Europäisches Patentamt

(19) European Patent Office

Office européen des brevets

(11) Numéro de publication: **0 078 248
B1**

(12) **FASCICULE DE BREVET EUROPEEN**

(51) Int. Cl.⁴: **B 60 J 7/06,** B 62 D 33/04

(45) Date de publication du fascicule du brevet:
**19.02.86**

(21) Numéro de dépôt: **82870059.1**

(22) Date de dépôt: **27.10.82**

(54) **Dispositif d'enroulement de rideaux de bâchage.**

(30) Priorité: **28.10.81 FR 8120227**

(43) Date de publication de la demande:
**04.05.83 Bulletin 83/18**

(45) Mention de la délivrance du brevet:
**19.02.86 Bulletin 86/8**

(84) Etats contractants désignés:
**BE DE GB IT LU NL**

(56) Documents cités:
**CH - A - 546 159
DE - A - 1 146 768
DE - A - 2 951 071
DE - A - 3 026 444
FR - A - 2 352 689
GB - A - 1 262 880
GB - A - 2 041 839
GB - A - 2 066 746
US - A - 2 496 437
US - A - 2 584 014
US - A - 4 212 492**

(73) Titulaire: **Delsaux, Willy, 13, Rue de L'Eglise,
B-6553 Hantes-Wihéries (BE)**
Titulaire: **Volant, Claude, 105, Rue de la Samme,
B-7130 Binche (BE)**

(72) Inventeur: **Delsaux, Willy, 13, Rue de l'Eglise,
B-6553 Hantes-Wihéries (BE)**

(74) Mandataire: **Plucker, Guy et al, OFFICE
KIRKPATRICK 4 Square de Meeûs, B-1040 Bruxelles
(BE)**

## Description

La présente invention concerne un dispositif d'enroulement de rideaux de bâchage qui permet d'ouvrir et de fermer une ouverture dans un cadre. Une application particulière est l'ouverture et la fermeture des parois latérales et/ou des parois d'extrémité d'une caisse de fourgon dont la forme est celle d'un parallélépipède rectangle.

Des caisses de fourgon munies d'un bâchage consitué par un ou plusieurs rideaux sont déjà connues. Suivant une forme d'exécution, le rideau, supporté au moins suivant son bord supérieur par un rail de guidage, coulisse parallèlement à la base du fourgon, et forme en coulissant des plis verticaux. Ce type de réalisation a le désavantage de compliquer l'accès aux marchandises, car le rideau replié d'un côté de la caisse de fourgon occupe près d'un cinquième de la longueur de celle-ci, et empêche l'accès aux marchandises situées de ce côté. D'autre part, la mise sous tension horizontale et verticale du rideau dans sa position étendue est longue et fastidieuse.

Suivant une autre forme d'exécution connue, le bord supérieur du rideau est fixé à la traverse supérieure d'une caisse de fourgon, et le rideau, dont les deux extrémités latérales sont guidées dans des rails verticaux, peut être ramené vers la traverse supérieure à laquelle il est fixé en formant une série de plis horizontaux. Le mécanisme de remontée du rideau peut être constitué par un treuil manuel ou peut être équipé d'un moteur électrique ou pneumatique. Par rapport au système décrit plus haut, cette forme d'exécution présente l'avantage de permettre l'ouverture et la fermeture plus rapides d'une face latérale d'une caisse de fourgon. Par contre, cette forme d'exécution ne supprime pas l'inconvénient provenant de l'encombrement du rideau replié. En effet, le rideau replié sous la traverse supérieure de la caisse de fourgon limite sensiblement la hauteur d'accès de la caisse de fourgon et par conséquent la hauteur du chargement lui-même, puisque ce dernier doit être introduit par l'ouverture délimitée vers le bas par la base de la caisse de fourgon et vers le haut par le bord inférieur du rideau replié.

Un autre système, tel celui décrit par le brevet GB-A-2 041 839, offre une solution à ce problème. Dans ce système, la traverse supérieure se déplace vers le milieu de la partie supérieure de la caisse de fourgon, entraînée par le bord inférieur du rideau, lorsque celui-ci s'enroule.

La traverse regagne sa position en descendant par son propre poids suivant un plan incliné. Ainsi le toit de la caisse de fourgon a la forme d'un dièdre, dont l'arête coïncide avec le milieu du toit.

Par ailleurs, dans ce système, la traverse n'est supportée que par ses extrémités, munies de roulettes, qui se déplacent sur des rails de guidage disposés dans des panneaux avant et arrière de la caisse de fourgon. La traverse supérieure est donc susceptible, lors de l'enroulement du rideau, de fléchir en son milieu, et par conséquent, d'entrer en contact avec le dessus de la marchandise, ou de s'y accrocher, ce qui empêche d'occuper la capacité théorique de chargement de la caisse de fourgon.

Dans la pratique, le volume situé directement en dessous du dièdre du toit, et qui a la forme d'un prisme à base triangulaire, reste inoccupé et est donc perdu.

Un système suivant le brevet GB-A-2 041 839 est defini dans le préambule de la revendication 1.

Le but de la présente invention est de réaliser un dispositif d'enroulement de rideaux de bâchage dans lequel les inconvénients précités sont supprimés, et qui présente d'autres avantages techniques. Un but de l'invention est de réaliser un dispositif permettant l'enroulement et le déroulement d'un rideau en dehors du plateau de chargement d'une caisse de fourgon, en évitant tout contact entre le rideau et le chargement lors de l'enroulement et du déroulement du rideau.

Un autre but de l'invention est de réaliser un dispositif tel que ci-dessus permettant de dégager au maximum l'ouverture de chargement dans une caisse de fourgon afin de faciliter le chargement.

Un autre but de l'invention est de réaliser un dispositif tel que ci-dessus permettant le calage du chargement au moyen du rideau dont le bord inférieur est amarré à la traverse inférieure du plateau de chargement.

La présente invention a pour objet un dispositif d'enroulement de rideau de bâchage, apte à fermer au moyen d'un rideau une ouverture dans un cadre en substance vertical constituant une face d'une caisse de fourgon ou analogue. Le bord supérieur du rideau est attaché à un enrouleur et le bord inférieur du rideau est muni de moyens aptes à le fixer de manière amovible à la traverse inférieure du cadre, le dit enrouleur étant actionné au moyen d'un mécanisme apte à commander l'enroulement et le déroulement du rideau, qui, partant de l'enrouleur, passe par-dessus un élément de support s'étendant sur toute la largeur du rideau, parallèlement au dit enrouleur.

Selon la partie caractérisante de la revendication 1, l'enrouleur est monté au voisinage d'une rive qui forme le côté supérieur du cadre et l'élément de support est monté à l'extrémité libre d'un ou plusieurs éléments flexibles montés en porte à faux sous l'enrouleur en étant fixés par leur extrémité opposée au voisinage de l'enrouleur de telle manière que le dit élément de support es décalé vers l'extérieur de la caisse de fourgon lorsqu'il n'est soumis qu'au poids du rideau qui prend appui sur lui, de manière à éviter tout contact entre la marchandise chargée et le rideau lorsque ce dernier est mis en mouvements, le rideau étant pourvu près de son bord inférieur de crochets ou organes analogues aptes à accrocher l'extrémité libre des dits éléments flexibles vers la fin de la manœuvre d'enroulement du rideau, en sorte que ces éléments flexibles soient alors fléchis vers le haut en dégageant ainsi complètement l'ouverture de la caisse de fourgon.

Suivant une forme de réalisation avantageuse de l'invention, l'axe de l'enrouleur et l'extrémité fixe du ou des éléments flexibles sont décalés vers l'intérieur de la caisse de fourgon par rapport au bord externe de la traverse inférieure du dit cadre, de sorte que lorsque le rideau déroulé est fixé par son bord inférieur à la traverse inférieure du cadre et ensuite tendu au moyen du mécanisme d'enroulement, la poussée exercée par le rideau sur le dit élément de support entraîne celui-ci vers le bas et vers l'intérieur de la caisse de fourgon, par fléchissement des dits éléments flexibles.

Suivant une forme particulière de réalisation, les supports flexibles sont constitués de lames formant ressort dont une extrémité est fixée à la face inférieure de l'enrouleur et dont l'extrémité libre supporte un tube s'étendant sur toute la largeur du rideau parallèlement à la traverse supérieure du cadre.

Une caractéristique intéressante de l'invention est que les lames sont munies à leur extrémité libre d'un bec dirigé vers le bas apte à coopérer avec des crochets disposés près du bord inférieur du rideau afin de réaliser vers la fin, de la manœuvre d'enroulement du rideau un accouplement entre les crochets et les lames.

Suivant un mode de réalisation particulier, le dispositif d'enroulement suivant l'invention comprend des moyens aptes à faire tourner manuellement l'enrouleur, ces moyens étant composés d'une manivelle placée près du plateau de chargement, d'un arbre vertical et d'un mécanisme à vis sans fin atuobloquant couplé à l'enrouleur, le dit arbre vertical reliant la dite manivelle au mécanisme à vis sans fin.

Suivant un autre mode de réalisation, le dispositif suivant l'invention comprend un moteur électrique, hydraulique ou pneumatique couplé à l'enrouleur au moyen d'un mécanisme à vis sans fin autobloquant.

Selon une forme de réalisation avantageuse de l'invention, l'enrouleur est soutenu à ses deux extrémités par des roulements à rotule admettant un léger fléchissement de l'enrouleur.

L'ensemble constitué par le rideau enroulé sur l'enrouleur peut, suivant une forme particulière de réalisation, être soutenu par au moins un support intermédiaire comportant deux galets aptes à soutenir cet ensemble sans qu'il y ait frottement de glissement avec le rideau.La face extérieure du rideau peut avantageusement être munie sur toute sa hauteur d'une bande verticale d'usure mince et flexible collée de manière amovible à l'aplomb du dit support intermédiaire.

D'autres caractéristiques et avantages de l'invention ressortiront de la description, donnée à titre d'exemple non limitatif, d'une forme de réalisation particulière de l'invention, référence étant faite aux dessins annexés dans lesquels:

la Fig. 1 est une vue en perspective d'une caisse de fourgon équipée latéralement d'un dispositif suivant l'invention;

la Fig. 2 représente, à plus grand échelle, une coupe verticale dans un fourgon équipé latéralement de deux dispositifs conformes à l'invention;

la Fig. 3 est une vue en perspective, à plus grande échelle, d'un dispositif suivant l'invention équipant une face latérale d'une caisse de fourgon;

la Fig. 4 est une vue schématique, à petite échelle, du dispositif suivant l'invention dans la position relevée;

La Fig. 5 est une vue schématique, à petite échelle, du dispositif suivant l'invention dans la position de repos;

la Fig. 6 est une vue schématique, à petite échelle, du dispositif suivant l'invention dans la position abaissée;

la Fig. 7 représente, à une échelle supérieure à celle des figures précédentes, une coupe au milieu de la portée de l'enrouleur, permettant d'illustrer un support intermédiaire;

la Fig. 8 représente la même coupe qu'en Fig. 2, mais avec des hauteurs de chargement particulières.

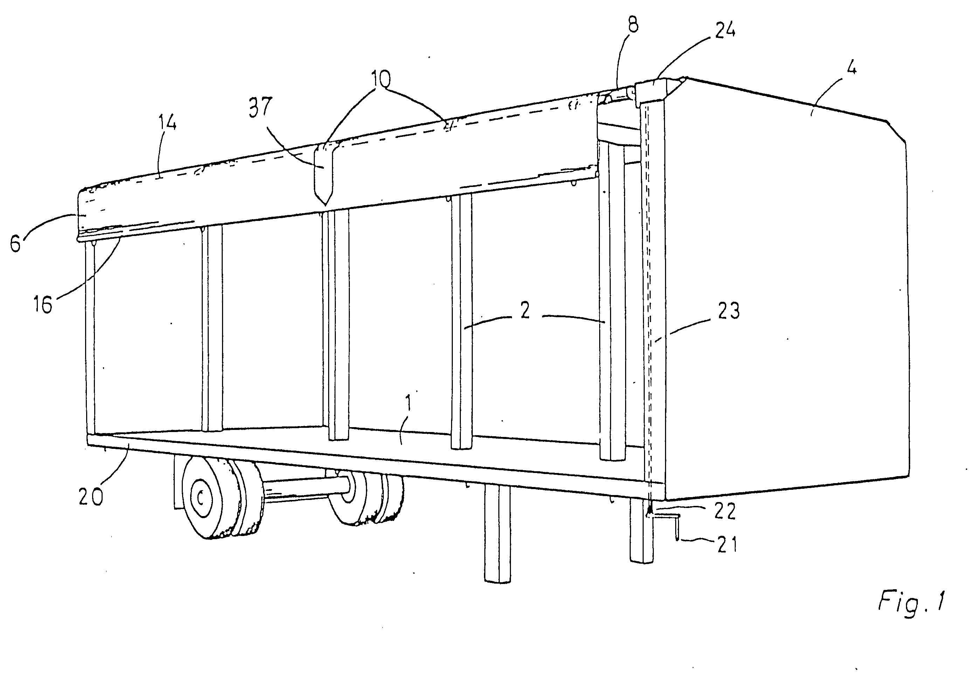

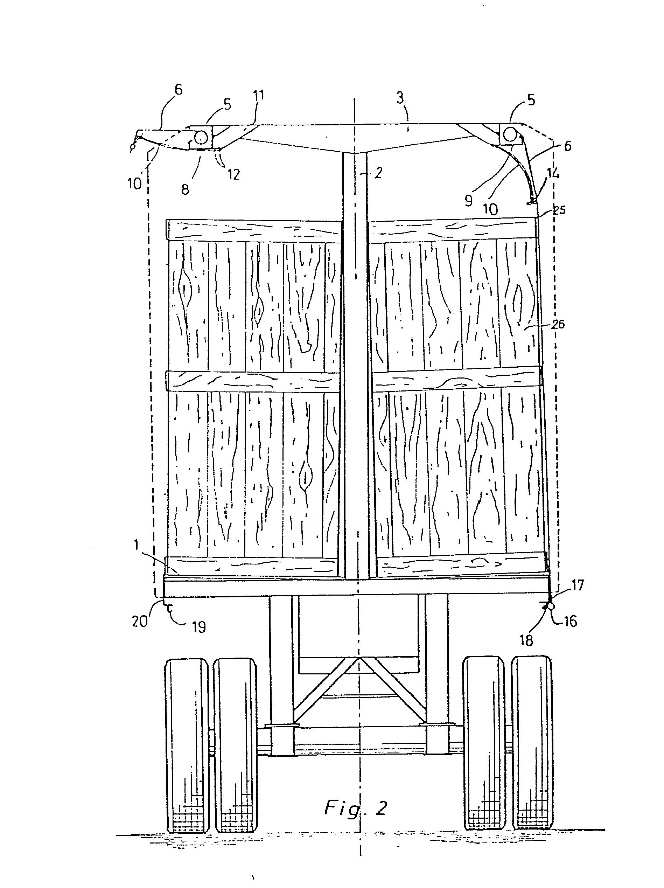

Les Fig. 1 et 2 représentent une semi-remorque aussi bien qu'une remorque de camion équipée latéralement de deux dispositifs d'enroulement de rideaux de bâchage. La caisse de fourgon est constituée d'un plateau de chargement 1, de colonnes verticales 2, de traverses supérieures 3 et de deux parois verticales avant et arrière 4. Aux extrémités des traverses 3 sont fixées deux rives 5 s'étendant sur toute la longueur de la caisse de fourgon.

La caisse de fourgon peut être bâchée latéralement par deux rideaux rectangulaires souples 6. De tels rideaux peuvent être prévus pour fermer chacune des faces latérales d'une caisse de fourgon. Le rideau 6 est attaché par un premier bord longitudinal 7 à un enrouleur 8 dont les deux extrémités tourillonnent dans des roulements à rotule non représentés. Directement sous l'enrouleur 8 sont placés à intervalles réguliers des supports 9 boulonés à la rive supérieure 5 et sous lesquels sont disposés des ressorts à lame 10. L'une des extrémités de ces ressorts est boulonnée sous le support 9 à un gousset 11, au moyen de vis 12, l'extrémité libre des ressorts étant munie d'un bec 13 et supportant un tube horizontal continu 14 au moyen de vis 15 passant au travers du ressort 10 et du tube 14. Partant de l'enrouleur 8, le rideau 6 passe par-dessus le tube 14 sur lequel il repose.

Le bord inférieur du rideau 6 est muni d'un tube horizontal 16 glissé dans l'ourlet 17 du rideau. Ce tube donne au rideau le poids nécessaire pour qu'il puisse descendre de lui-même lorsque l'enrouleur est actionné dans le sens du déroulement. Le tube 16 est muni à intervalles réguliers de crochets 18 aptes à être accrochés de manière amovible à des organes d'attache 19 disposés sous le longeron 20 du plateau de chargement 1 de la caisse de fourgon.

L'enrouleur 8, de longueur égale à celle du rideau 6, peut tourner dans des roulements à rotule non représentés sous l'action d'un mécanisme à vis sans fin. Ces roulements à rotule peuvent être fixés aux parois avant et arrière et admettent un léger fléchissement de l'enrouleur 8.

Suivant la Fig. 1, le tube 14 est supporté par cinq ressorts 10 répartis à intervalles réguliers sur toute la longueur du tube 14.

L'enrouleur 8 est accouplé à un mécanisme à vis sans fin comprenant une manivelle 21, un accouplement 22, un arbre vertical tournant 23 et un renvoi à 90° vis sans fin 24. L'utilisation d'une vis sans fin suivant l'invention est avantageuse car elle permet non seulement une démultiplication importante, mais également un blocage du rideau dans n'importe quelle position.

Il est également possible de remplacer la manivelle 21 par un moteur électrique, hydraulique ou pneumatique venant s'adapter à l'accouplement 22. La commande du moteur peut avantageusement être effectuée par un levier à trois positions, à savoir arrêt, marche avant, marche arrière, et la tension dans le rideau peut être limitée par un dispositif limiteur de pression (mécanique, hydraulique ou pneumatique).

La Fig. 2 montre un exemple de réalisation dans lequel deux dispositifs d'enroulement suivant l'invention sont montés latéralement dans l'ossature du toit d'un fourgon. Le dispositif d'enroulement représenté du côté gauche de la Fig. 2 est dans la position relevée, le rideau 6 et le tube dégageant l'ouverture latérale du fourgon. Le véhicule est prêt à charger ou à décharger. Le dégagement de l'ouverture permet le chargement et le déchargement rapides au moyen de transporteurs à palettes, par exemple, car le rideau 6 ne risque pas d'accrocher le bord supérieur de la marchandise lorsque celle-ci est soulevée par le transporteur à palettes avant d'être introduite ou retirée du fourgon.

Le dispositif d'enroulement représenté du côté droit de la Fig. 2 montre le rideau 6 descendu et tendu. Grâce à la flexion du ressort 10, le tube 14 est dévié vers le bas et vers l'intérieur du véhicule, en même temps que la partie supérieure du rideau 6. De cette manière, le rideau 6 entre en contact avec l'arête latérale supérieure 25 de la marchandise 26, ce qui permet le calage de celle-ci.

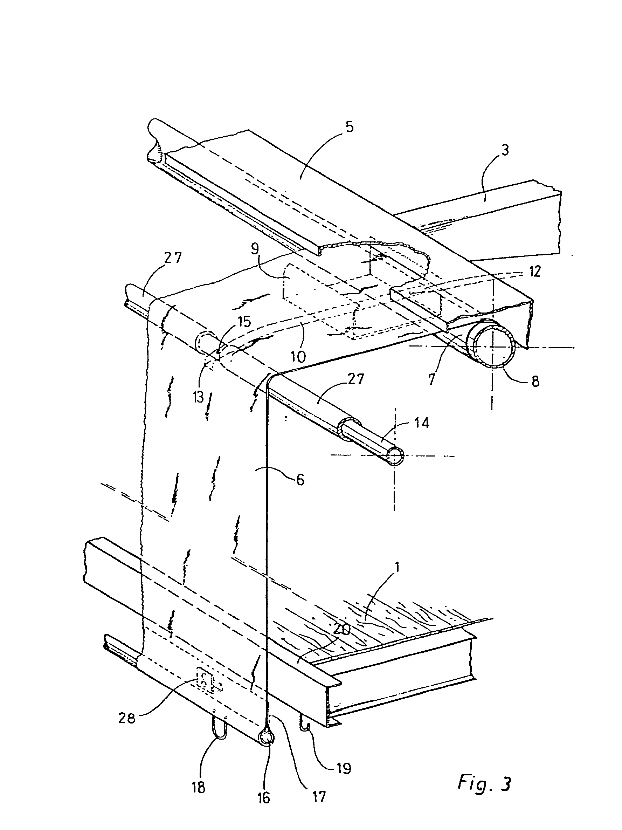

On a représenté à la Fig. 3, à plus grande échelle et en perspective, l'extrémité de la traverse 3 du toit d'une caisse de fourgon, un rive supérieure 5 fixée à la traverse 3 et une partie du plateau de chargement 1 de la caisse de fourgon.

La Fig. 3 montre un exemple de réalisation du tube support 14. Afin de diminuer les frottements du rideau 6, des tronçons 27 d'un tube de diamètre légèrement supérieur à celui du tube 14 sont disposés autour de ce dernier, la longueur de chaque tronçon 27 étant telle que ceux-ci peuvent être insérés entre les ressorts 10 et tourner librement autour du tube 14. Le rideau 16 repose sur les tronçons de tube 27 et pourra être enroulé et déroulé sans frottement.

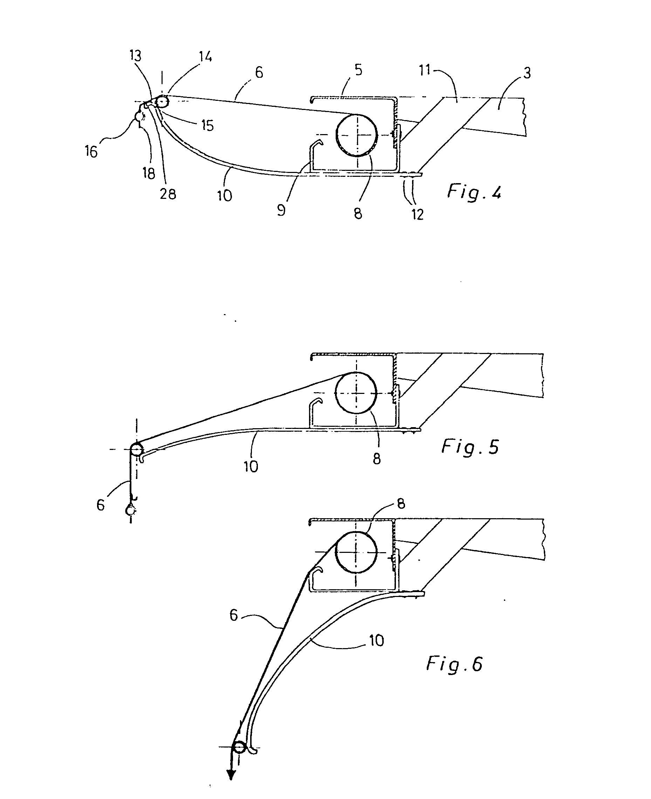

Des crochets 28 sont disposés immédiatement au-dessus du tube 16 et fixés à l'ourlet 17 de la bâche 6 à l'aplomb des ressorts 10. La fonction des crochets 28 est illustrée à la Fig. 4.

La Fig. 4 représente schématiquement la position relevée du dispositif suivant l'invention. Afin de dégager au maximum l'ouverture de chargement d'une caisse de fourgon, le rideau 6 est remonté au moyen de l'enrouleur 8 jusqu'à ce que les crochets 28 viennent en contact avec les becs 13 dont sont munies les extrémité des ressorts 10. Après l'accouplement des becs 13 avec les crochets 28, on continue à actionner l'enrouleur 8 afin de tendre le rideau 6 et de tirer vers le haut en les pliant les ressorts 10. Les ressorts 10 sont pliés jusqu'à ce que le tube 16 dégage complètement l'entrée de la caisse de fourgon.

La Fig. 5 représente la position dans laquelle les ressorts 10 sont soumis au poids du tube 16. Les ressorts 10 sont sensiblement horizontaux et leur longueur est telle qu'il y ait un déport du tube 16 par rapport à la caisse de fourgon et à son chargement. Au fur et à mesure de la descente du rideau 6 actionné par l'enrouleur 8, les ressorts 10 sont soumis à un effort de flexion croissant et ils commencent à s'incurver vers le bas, mais sans que le tube 16 ne vienne en contact avec le longeron 20 du plateau de chargement 1.

La Fig. 6 représente le rideau 6 mis sous tension verticalement. Pour tendre le rideau 6, il suffit d'accrocher les crochets 18 à des organes d'attache 19 disposés sous le longeron 20 du plateau de chargement 1 (voir Fig. 3)., puis d'actionner l'enrouleur 8 dans le sens de la montée, ce qui a pour effet de tendre le rideau 6 et de plier les ressorts 10 vers le bas et vers l'intérieur de la caisse de fourgon. Une fois tendu, le rideau 6 forme un angle aigu avec le plateau de chargement 1, ce qui garantit le calage de la marchandise.

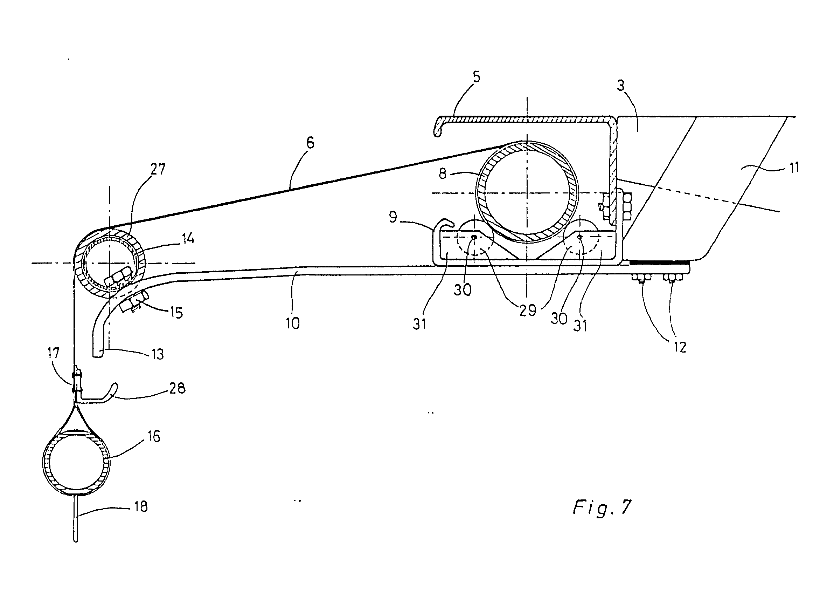

La Fig. 7 illustre, à plus grande échelle, un mode de réalisation d'un support intermédiaire de l'enrouleur 8. L'ensemble constitué par le rideau 6 enroulé sur l'enrouleur 8 est soutenu par deux galets 29 pouvant tourner librement sur des axes 30 passés au travers de goussets 31 soudés à une traverse supérieure 3. Un tel support intermédiaire d'enrouleur est employé pour réduire la flèche de l'enrouleur lorsque la portée devient trop importante. Pour une portée de 12 mètres par exemple, il est avantageux de monter l'enrouleur sur deux roulements d'extrémité à rotule et de soutenir l'enrouleur au milieu de la portée au moyen d'un support intermédiaire tel que celui représenté à la Fig. 7. De cette manière, il est possible d'employer un enrouleur de diamètre plus faible que s'il n'était supporté qu'aux extrémités, ce qui permet de gagner quelques centimètres en hauteur.

Afin d'éviter l'usure du rideau par frottement avec les galets 29 du support intermédiaire, il est prévu de munir la face extérieure du rideau 6 d'une bande verticale 37 mince et flexible s'étendant sur toute la hauteur du rideau 6 à l'aplomb du support intermédiaire. De cette manière, lorsque le rideau 6 est enroulé et déroulé sur l'enrouleur, seule la bande d'usure 37 entre en contact avec les galets 29, ce qui protège efficacement le rideau 6 lui-même. La bande 37, représentée à la Fig. 1, peut être collée sur la face extérieure du rideau 6 de manière amovible, et peut de ce fait être remplacée périodiquement par une nouvelle bande lorsque son usure l'exige.

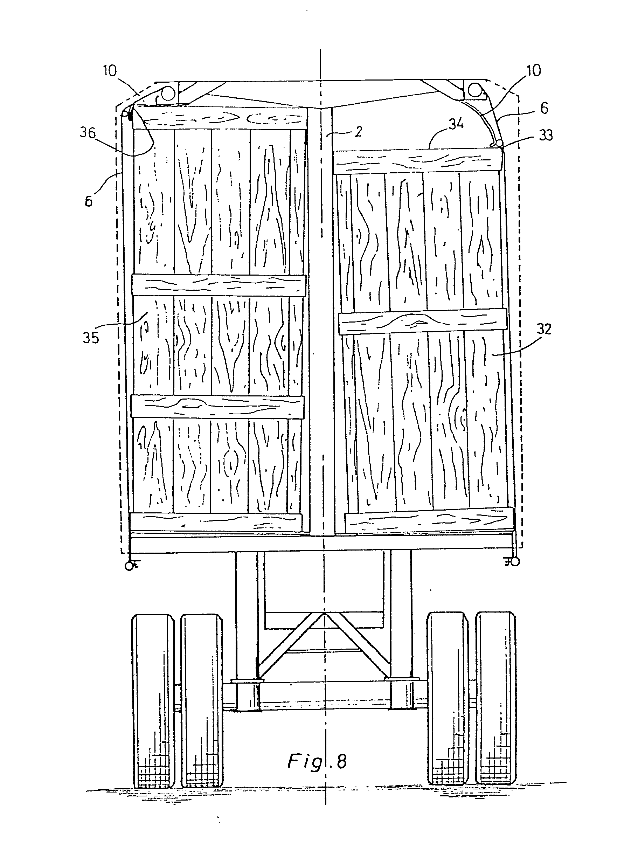

La Fig. 8 montre comment le ressort 10 s'adapte au chargement dans deux cas particuliers. La caisse 32, représentée du côté droit de la Fig. 8, a une hauteur telle que le ressort 10 et le rideau 6 touchent la caisse au même moment. Dans cette position, la caisse 32 est calée non seulement par le rideau 6 qui entre en contact avec son arête latérale supérieure 33, mais également par le ressort 10 qui entre en contact avec sa face supérieure 34. La caisse 35, représentée du côté gauche de la Fig. 8, a une hauteur maximum pour le véhicule représenté. Dans ce cas particulier, le rideau 6 n'entre pas en contact avec la caisse 35, mais le calage de celle-ci est assuré par le ressort 10 lui-même qui est fléchi suivant l'arête supérieure 36 de la caisse 35.

Comme il ressort des figures, et particulièrement des Fig. 2 et 8, le dispositif d'enroulement de rideaux de bâchage amène une série d'avantages intéressants.

Le dispositif permet l'ouverture et la fermeture rapides des faces latérales d'une caisse de fourgon, tout particulièrement lorsque la commande de l'enrouleur est motorisée.

Le dispositif nécessite un encombrement minimum dans l'ossature du toit et peut aisément être placé dans une position relevée dégageant complètement l'ouverture dans une caisse de fourgon, ce qui laisse un espace maximum pour la marchandise.

Pendand le déplacement du rideau, que ce soit en montée ou en descente, le rideau est déporté vers l'extérieur et n'entre donc jamais en contact avec la marchandise ou avec le plateau de chargement. Cette caractéristique est intéressante car elle facilite évidemment les mouvements rapides du rideau et elle évite l'usure et les dégâts qui pourraient être causés au rideau par les arêtes des caisses de marchandise.

**Revendications**

1. Dispositif d'enroulement de rideau de bâchage apte à fermer une ouverture dans un cadre en substance vertical constituant une face d'une caisse de fourgon ou analogue, et comprenant un rideau (6) dont le bord supérieur (7) est attaché à un enrouleur (8) et dont le bord inférieur est muni de moyens aptes à le fixer de manière amovible à une traverse inférieure (20) du cadre, le dit enrouleur (8) étant actionné au moyen d'un mécanisme apte à commander l'enroulement et le déroulement du rideau (6) qui partant de l'enrouleur (8), passe par-dessus un élément de support (14) s'étendant sur toute la largeur du rideau (6), parallèlement au dit enrouleur (8), caractérisé en ce que le dit enrouleur (8) est monté au voisinage d'une rive (5) qui forme le côté supérieur du cadre et l'élément de support (14) est monté à l'extrémité libre d'un ou plusieurs éléments flexibles (10) montés en porte à faux sous l'enrouleur (8) en étant fixés par leur extrémité opposée au voisinage de celui-ci, de telle manière que le dit élément de support (14) est décalé vers l'extérieur de la caisse de fourgon lorsqu'il n'est soumis qu'au poids du rideau (6) qui prend appui sur lui, de manière à éviter tout contact entre la marchandise chargée et le rideau (6) lorsque ce dernier est mis en mouvement, le rideau (6) étant pourvu près de son bord inférieur de crochets (28) ou organes analogues aptes à accrocher l'extrémité libre des dits éléments flexibles (10) vers la fin de la manœuvre d'enroulement du rideau, en sorte que ces éléments flexibles (10) sont alors fléchis vers le haut en dégageant ainsi complètement l'ouverture de la caisse de fourgon.

2. Dispositif suivant la revendication 1, caractérisé en ce que l'axe de l'enrouleur (8) et l'extrémité fixe du ou des éléments flexibles (10) sont décalés vers l'intérieur de la caisse de fourgon par rapport au bord externe de la traverse inférieure (20) du dit cadre, de sorte que lorsque le rideau (6) déroulé est fixé par son bord inférieur à la traverse inférieure (20) du cadre et ensuite tendu au moyen du mécanisme d'enroulement, la poussée exercée par le rideau (6) sur le dit élément de support (14) entraîne celui-ci vers le bas et vers l'intérieur de la caisse de fourgon, par fléchissement des dits éléments flexibles (10).

3. Dispositif suivant l'une quelconque des revendications précédentes, caractérisé en ce que les supports flexibles sont constitués de lames (10) formant ressort dont une extrémité est fixée à la face inférieure de l'enrouleur (8) et dont l'extrémité libre supporte un tube (14) s'étendant sur toute la largeur du rideau (6) parallèlement à la rive (5) du cadre.

4. Dispositif suivant l'une quelconque des revendications précédentes, caractérisé en ce que les lames (10) sont munies à leur extrémité libre d'un bec (13) dirigé vers le bas apte à coopérer avec des crochets (28) disposés près du bord inférieur du rideau (6) afin de réaliser vers la fin de la manœuvre d'enroulement du rideau (6) un accouplement entre les crochets (28) et les lames (10).

5. Dispositif suivant l'une quelconque des revendications précédentes, caractérisé en ce qu'il comprend des moyens aptes à faire tourner manuellement l'enrouleur (8), ces moyens étant composés d'une manivelle (21) placée près du plateau de chargement (1), d'un arbre vertical (23) et d'un mécanisme à vis sans fin (24) autobloquant couplé à l'enrouleur, le dit arbre vertical (23) reliant la dite manivelle (21) au mécanisme à vis sans fin (24).

6. Dispositif suivant l'une quelconque des revendications 1 à 4, caractérisé en ce qu'il comprend un moteur électrique, hydraulique ou pneumatique couplé à l'enrouleur (8) au moyen d'un mécanisme à vis sans fin (24) autobloquant.

7. Dispositif suivant l'une quelconque des revendications précédentes, caractérisé en ce que l'enrouleur (8) est soutenu à ses deux extrémités par des roulements à rotule admettant un léger fléchissement de l'enrouleur (8).

8. Dispositif suivant l'une quelconque des revendications précédentes, caractérisé en ce que l'ensemble constitué par le rideau (6) enroulé sur l'enrouleur (8) est soutenu par au moins un support intermédiaire comportant deux galets (29) aptes à soutenir cet ensemble sans qu'il y ait frottement de glissement avec le rideau (6).

9. Dispositif suivant la revendication 8, caractérisé en ce que la face extérieure du rideau (6) est munie sur toute sa hauteur d'une bande verticale d'usure (37) mince et flexible collée de manière amovible à l'aplomb du support intermédiaire.

## Patentansprüche

1. Aufwickelvorrichtung für eine Plane, die eine Öffnung in einem im wesentlichen senkrechten Rahmen schliessen kann, der eine Seite eines Kastenaufbaus eines Lastwagens oder dergl. bildet, und die aus einem Vorhang (6) besteht, dessen oberer Rand (7) an einer Aufwickelrolle (8) befestigt ist, und dessen unterer Rand mit Mitteln versehen ist, mit denen er abnehmbar an der unteren Traverse (20) des Rahmens befestigt werden kann, wobei die Aufwickelrolle (8) durch einen Auf- und Abwickelmechanismus für den Vorhang (6) betätigt wird, der ausgehend von der Aufwickelrolle (8) über ein Stützelement (14) läuft, das sich parallel zur Aufwickelrolle (8) über die ganze Breite des Vorhangs (6) erstreckt, dadurch gekennzeichnet, dass die Aufwickelrolle (8) in der Nähe einer Abdeckung (5) angebracht ist, die den oberen Rand des Rahmens bildet und dass das Stützelement (14) am freien Ende eines oder mehrerer biegsamer Elemente (10) angebracht ist, die freitragend unter der Aufwickelrolle (8) angeordnet sind, wobei sie an ihrem gegenüberliegenden Ende in der Nähe dieser Aufwickelanlage befestigt sind, so dass das Stützelement (14) nach ausserhalb des Kastenaufbaus des Lastwagens versetzt wird, wenn es nur dem Gewicht des sich darauf stützenden Vorhangs (6) ausgesetzt wird, um jede Berührung der Ladung mit dem Vorhang (6) zu vermeiden, wenn letzterer in Bewegung gesetzt wird, wobei der Vorhang (6) in der Nähe seines unteren Randes mit Haken (28) oder ähnlichen Teilen ausgestattet ist, mit denen das freie Ende der biegsamen Elemente (10) gegen das Ende des Aufrollens des Vorhangs festgemacht werden kann, so dass diese biegsamen Elemente (10) sich dann nach oben biegen und damit die Öffnung des Kastenaufbaus des Lastwagens ganz frei machen.

2. Vorrichtung nach Anspruch 1, dadurch gekennzeichnet, dass die Achse der Aufwickelrolle (8) und das feste Ende des oder der biegsamen Elemente (10) gegenüber dem Aussenrand der unteren Traverse (20) des Rahmens ins Innere des Kastenaufbaus versetzt sind, so dass der vom Vorhang (6) auf das Stützelement (14) ausgeübte Druck dieses wegen des Durchbiegens der biegsamen Elemente nach unten und ins Innere des Kastenaufbaus mitnimmt, wenn der Vorhang (6) heruntergelassen und mit seinem unteren Rand an der unteren Traverse (20) des Rahmens befestigt und dann durch den Aufwickelmechanismus gespannt wird.

3. Vorrichtung nach einem der vorangehenden Ansprüche, dadurch gekennzeichnet, dass die biegsamen Befestigungen aus Federblättern (10) bestehen, deren eines Ende an der Unterseite der Aufwickelrolle (8) befestigt ist, und deren freies Ende ein Rohr (14) trägt, das sich parallel zur Abdeckung (5) des Rahmens über die ganze Breite des Vorhangs (6) erstreckt.

4. Vorrichtung nach einem der vorangehenden Ansprüche, dadurch gekennzeichnet, dass die Federblätter (10) an ihrem freien Ende mit einer nach unten gerichteten Nase (13) ausgestattet sind, die mit dem am unteren Rand des Vorhangs (6) angeordneten Haken zusammenwirken kann, damit sich die Haken (28) und die Lamellen (10) am Ende des Aufwickelns des Vorhangs (6) kuppeln.

5. Vorrichtung nach einem der vorangehenden Ansprüche, dadurch gekennzeichnet, dass sie Mittel zum manuellen Drehen der Aufwickelrolle (8) enthält, die aus einer in der Nähe der Ladebühne angebrachten Kurbel (21), einer senkrechten Achse (23) und einem selbtsperrenden mit der Aufwickelrolle gekoppelten Schneckenmechanismus (24) besteht, wobei die Achse (23) die Kurbel (21) mit dem Schneckenmechanismus (24) verbindet.

6. Vorrichtung nach einem der vorangehenden Ansprüche, dadurch gekennzeichnet, dass sie einen elektrischen, hydraulischen oder pneumatischen Motor enthält, der durch einen selbstsperrenden Schneckenmechanismus (24) mit der Aufwickelrolle (8) gekoppelt ist.

7. Vorrichtung nach einem der vorangehenden Ansprüche, dadurch gekennzeichnet, dass die Aufwickelrolle (8) an ihren beiden Enden durch Tonnenlager gestützt ist, die eine leichte Durchbiegung der Aufwickelrolle (8) ermöglichen.

8. Vorrichtung nach einem der vorangehenden Ansprüche, dadurch gekennzeichnet, dass der auf der Aufwickelrolle (8) aufgewickelte Vorhang (6) als Ganzes durch mindestens eine Zwischenauflage gestützt ist, die aus zwei Rollen (29) besteht, die das Ganze ohne Gleitreibung mit dem Vorhang (6) stützen können.

9. Vorrichtung nach Anspruch 8, dadurch gekennzeichnet, dass die Aussenseite des Vorhanges (6) auf ihrer ganzen Höhe mit einem schmalen, flexiblen senkrechten Abnutzungsband (37) versehen ist, das lösbar und lotrecht zur Zwischenauflage angeklebt ist.

## Claims

1. Rolling-up device for a tarpaulin sheet designed to close an orifice in a substantially vertical frame constituting one face of the body of a van or the like, and having a sheet (6), the upper edge (7) of which is attached to a winder (8) and the lower edge of which is provided with means designed to fasten it removably to a lower crossmember (20) of the frame, the said winder (8) being actuated by means of a mechanism designed to control the rolling up and unrolling of the sheet (6) which, starting from the winder (8), passes over a supporting element (14) extending over the entire width of the sheet (6) parallel to the said winder (8) characterised in that the said winder (8) is mounted in the vicinity of an edge (5) which forms the upper side of the frame, and the supporting element (14) is mounted on the free end of one or more flexible elements (10) projecting under the winder (8) and being fastened in the vicinity of the latter by means of their opposite end, in such a way that the said supporting element (14) is offset towards the outside of the van body when it is subjected only to the weight of the sheet (6) bearing on it, so as to prevent any contact between the load carried and the sheet (6) when the latter is set in motion, the sheet (6) being provided near its lower edge with hooks (28) or similar means designed to hook onto the free end of the said flexible elements (10) towards the end of the operation to roll up the sheet, so that these flexible elements (10) are then deflected upwards, thus exposing the orifice in the van body completely.

2. Device according to Claim 1, characterised in that the axis of the winder (8) and the fixed end of the flexible element or elements (10) are offset towards the inside of the van body in relation to the outer edge of the lower crossmember (20) of the said frame, so that, when the unrolled sheet () is fastened by means of its lower edge to the lower crossmember (20) of the frame and is subsequently stretched by means of the rolling-up mechanism, the thrust exerted by the sheet (6) on the said supporting element (14) forces the latter downwards and towards the inside of the van body as a result of the deflection of the said flexible elements (10).

3. Device according to either one of the preceding claims, characterised in that the flexible supports consist of blades (10) forming a spring, one end of which is fastened to the lower face of the winder (8) and the free end of which supports a tube (14) extending over the entire width of the sheet (6) parallel to the edge (5) of the frame.

4. Device according to any one of the preceding claims, characterised in that the blades (10) are each provided at their free ends with a downward-directed nose (13) designed to interact with hooks (28) arranged near the lower edge of the sheet (6), in order, towards the end of the operation to roll up the sheet (6), to ensure coupling between the hooks (28) and the blades (10).

5. Device according to any one of the preceding claims, characterised in that it possesses means designed to rotate the winder manually (8), these means consisting of a crank handle (21) located near the loading board (1), a vertical shaft (23) and a self-locking endless-screw mechanism (24) coupled to the winder, the said vertical shaft (23) connecting the said crank handle (21) to the endless-screw mechanism (24).

6. Device according to any one of Claims 1 to 4, characterised in that it incorporates an electric, hydraulic or pneumatic motor coupled to the winder (8) by means of a self-locking endless-screw mechanism (24).

7. Device according to any one of the preceding claims, characterised in that the winder (8) is supported at its two ends by swivel-joint roller bearings allowing a slight deflection of the winder (8).

8. Device according to any one of the preceding claims, characterised in that the assembly consisting of the sheet (6) rolled up on the winder (8) is supported by at least one intermediate support comprising two rollers (29) designed to support this assembly without any sliding friction with the sheet (6).

9. Device according to Claim 8, characterised in that the outer face of the sheet (6) is provided over its entire height with a thin flexible vertical wearing strip (37) glued removably plumb with the intermediate support.

Fig.1

0 078 248

2|6

Fig. 2

3/6

Fig. 3

13

4|6

Fig. 4

Fig. 5

Fig. 6

Fig. 7

6/6

Fig. 8